# EUROPEAN PATENT SPECIFICATION

(11) **EP 3 291 664 B1**
(45) Date of publication and mention of the grant of the patent: **20.01.2021**
(21) Application number: 16807041.5
(22) Date of filing: 19.05.2016
(51) Int. Cl.: A01B 33/14

(54) **A QUICK FIT MECHANISM FOR POWER HARROW BLADE**
SCHNELLVERSCHLUSSMECHANISMUS FÜR KREISELEGGENMESSER
MÉCANISME DE MONTAGE RAPIDE POUR LAME DE HERSE À MOUVEMENT ALTERNATIF

(30) Priority: 12.06.2015 IN 2262MU2015
(43) Date of publication of application: 14.03.2018
(73) Proprietor: Tirth Agro Technology Pvt. Ltd., Rajkot Gujarat 360311 (IN)
(72) Inventor: APARNATHI, Bhavesh Prabhatgiri, Rajkot Gujarat 360311 (IN)
(74) Representative: Mink-Lindenburg, Charlotte Hildegard
(86) International application number: PCT/IN2016/050146
(87) International publication number: WO 2016/199163

(56) References cited:
- EP-A1- 0 891 688
- EP-A1- 1 287 728
- EP-A1- 1 419 682
- EP-A2- 0 211 276
- DE-A1- 4 310 750
- DE-A1- 4 310 750
- DE-T2- 69 802 346
- FR-A1- 2 789 542

## Description

### Field of Invention:

The present invention relates to a quick fit mechanism for a power harrow blade and a power harrow blade assembly to easily replace the blade to minimize downtime and hence to increase the field efficiency.

### Background of the Present Invention:

A number of different implements are known which incorporate weeding or cutting knives, sometimes known as sweeps or sweep blades, which in use operate below the surface of soil and which are design to severe the roots or stems of plants such as weed or trees as they travel through the soil. In one form the implements are decided tools and comprise rigid cutting blades. Alternatively, weeding implements can be in the form of a rod which may be supported from a toolbar trailed from a prime mover such as a tractor so as to extend transversely relative to the direction of travel and which can be driven to rotate about its longitudinal axis.

A conventional power harrow comprises a transverse beam, and at a number of spaced positions along the length of the beam pairs of soil working blades. The beam which is hollow accommodates a drive train which drives each blade pair about a vertical axis from the power take-off shaft of an agricultural tractor as the latter pulls the harrow across the land to be worked.

US 1299291 relates to a power harrow having a frame that is normally substantially horizontal and at least one rotor. A rotatable shaft is journalled near one end in a bearing secured to the frame. The rotor is in driven connection with the other end of the shaft, and is rotated about a normally upright axis, so as to make contact with the soil to work it. A protective shield surrounds the bearing from below.

EP 1208729 discloses a blade assembly for a power harrow, the assembly comprising support means formed with two recesses, two harrow blades each having a support flange receivable in a respective recess, the support means carrying two retaining members each movable between an operative position in which the retaining member locks the corresponding blade in position in the corresponding recess, and an inoperative position allowing insertion of the flange into the recess or withdrawal of the flange from the recess, each retaining member being biased towards the operative position. Documents DE 698 02 346 T2, DE 43 10 750 A1, FR 2 789 542 A1, EP 1 287 728 A1 and EP 1 419 682 A1 refer to known power harrow blade assemblies.

The soil working harrow blades experience huge amount of force while working in the field and have to be replaced frequently. The time taken in replacing the blades was too much in the known machines because of their complex mechanism. Hence, there is a need of an invention or a machine having a simple mechanism for replacing blades in a short time to overcome the above problems and to increase its efficiency by maintaining the machine.

### Object of the Present Invention:

The main object of the present invention is to provide **a quick fit mechanism for** a **power harrow blade** and a power harrow blade assembly to easily replace a blade for maintenance of the machine.

Furthermore, an object of the invention is to increase the field efficiency of the machine.

### Summary of the Present Invention:

The present invention relates to **a quick fit mechanism for** a **power harrow** blade, and a power harrow blade assembly carried by a rotor to transmit power and rotation using the driving shafts and various spur gears to rotate the power harrow blade to cultivate the soil of land. The power harrow blade assembly comprises at least a pair of power harrow blades which are mounted at a fixed angle on a rotatable blade mount housing each power harrow blade fastened with a double pin fastened in the holes of the power harrow blade and blade mount housing, the double pin having a single pin as a supporting part which is locked by a linchpin inserted in the hole of single pin to hold the power harrow blade assembly. The assembly of the power harrow blades reduces maintenance time by quick releasing and/or attaching the power harrow blades and increases the field efficiency.

### Brief Description of Drawings:

Fig. 1 is a schematic drawing of **a quick fit mechanism for** a **power harrow blade.**
Fig.2 is an exploded view of **a quick fit mechanism for** a **power harrow blade.**

### Detailed Description of Present Invention:

Before explaining the present invention in detail, it is to be understood that the invention is not limited in its application to the details of the construction and arrangement of parts illustrated in the accompany drawings. The invention is capable of other embodiments within the scope of the appended claim than the embodiments as depicted in the different figures mentioned above. It is to be understood that the phraseology and terminology employed herein is for the purpose of description and not of limitation.

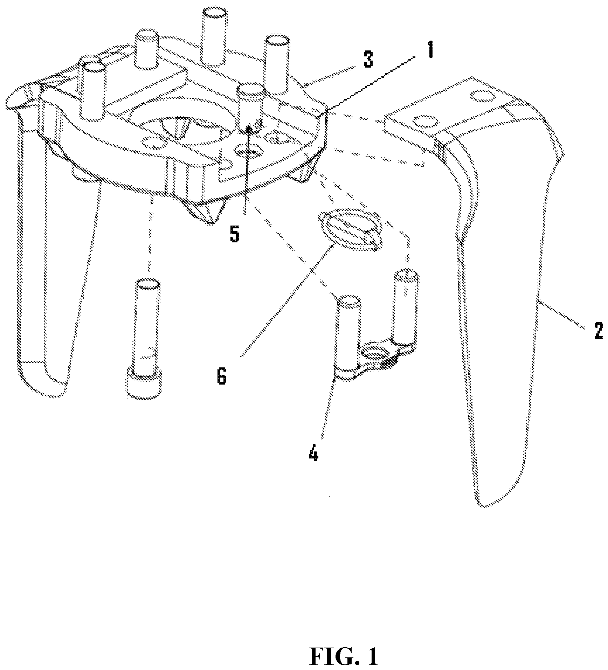

The present invention relates to a quick fit mechanism for power harrow blade and a power harrow blade assembly (1) which is carried out by a rotor. As shown in fig. 1, the power harrow blade assembly (1) comprises at least a pair of sharp edge power harrow blades (2) for cultivating soil which are mounted on the rotatable sealed bearing blade mount housing (3) at a fixed angle. Each power harrow blade (2) has two holes to be fastened on the blade mount housing (3) by a u-shaped double pin (4). The double pin (4) has a hole in which the single pin (5) is fastened to provide a form-fitting connection and to hold the single pin (5) through a linchpin (6) by passing via the hole of the single pin (5) thereby locking the power harrow blade assembly (1).

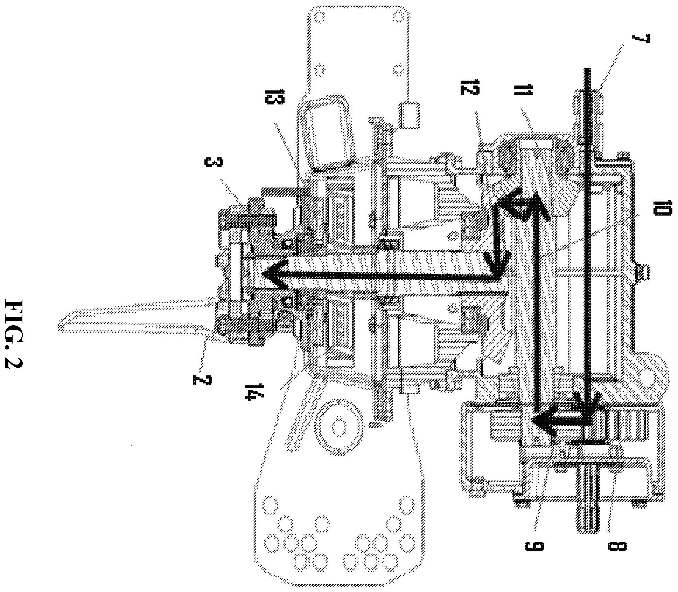

As shown in the fig. 2, the rotor comprises driving shafts (7, 10, 13) and various gears (8, 9, 11, 12, 14) which are connected to the power harrow blade assembly (1). The driving shafts having an input shaft (7) from where the power is transferred and a pair of spur gears (8, 9) to rotate the relative parts by transmitting large amount of power. The rotor also comprises an intermediate shaft (10) and main drive shaft (13) to pass the rotation and power and a pair of bevel gears ((pinion) 11, (crown) 12) which drive in a 90° angle towards the other gears.

Said power harrow blade (2) has a sharp edge cultivating knife manufactured from high resistance forge steel material to optimise for lower power requirement to consume minimum diesel while it is in working position. The said power harrow blades (2) are long enough to till depths of any soil and improve its organic structure.

Said power harrow blade (2) is mounted on the blade mount housing (3) which is also manufactured form high resistance forge steel material and securely fixed with the spur gear (14) using the retaining members to rotate on its fixed axes.

The power harrow blade (2) and the blade mount housing (3) are connected through the u-shaped double pin (4), a single pin (5) and a linchpin (6). The double pin (4) is a fastening part having two ends to insert in the mounting holes and a hole in the middle place at which the single pin (5) is attached. Said single pin (5) is also another mounting pin with a hole to fix in a form-fitting manner to the power harrow blade (2) and to be locked though a linchpin (6).

The power harrow blade assembly (1) provides easily and quickly replaceable power harrow blades (2). To remove the power harrow blade (2), the linchpin (6) is removed from the single pin (5) by removal from said assembly (1). Said single pin (5) is a supporting part of the double pin (4) which is withdrawn from the corresponding slot after removing the linchpin (6), so that the power harrow blade (2) is removed from the blade mount housing (3) and another power harrow blade (2) can be placed on it. To mount the power harrow blade (2), the blade is placed on the blade mount housing (3) and the double pin (4) is inserted in the holes to fasten the blade with the housing (3) and then the single pin (5) is inserted in the double pin hole and locked with the linchpin (6).

During work, the rotor transmits power through the input shaft (7) to the pair of spur gears (8, 9), which are reducing the speed and transmitting power to the bevel gears (pinion (11), crown (12)) which are changing the direction of the rotation at 90° through the intermediate shaft (10) to pass the rotation. After passing through the bevel gears (11, 12), the main drive shaft (13) pass the power to the spur gear (14) to rotate the rotatable blade mount housing (3). Hence, the power harrow blades (2) are rotating and cultivating land.

## Claims

1. A quick fit mechanism for a power harrow blade, and a power harrow blade assembly (1) carried by a rotor through driving shafts (7, 10, 13) and gears (8, 9, 11, 12, 14) to transfer power and rotation for rotating the attached power harrow blade assembly (1); said power harrow blade assembly (1) comprises at least a pair of power harrow blades (2) mounted on a rotatable blade mount housing (3) at a fixed angle through holes provided on each power harrow blade (2) with a double pin (4), **characterized in that** said double pin (4) has a hole in which a single pin (5) functioning as a supporting part is locked by a linchpin (6) inserted in a hole of the single pin (5) thereby locking and holding the power harrow blade assembly (1) such that each power harrow blade (2) is mounted on the rotatable blade mount housing (3) by a double pin (4), a single pin (5) and a linchpin (6).

## Patentansprüche

1. Schnellbefestigungsmechanismus für ein Kreiseleggenblatt und eine Kreiseleggenblattanordnung (1), die von einem Rotor über Antriebswellen (7, 10, 13) und Zahnräder (8, 9, 11, 12, 14) angetrieben wird, um Antriebskraft und Rotationskraft zum Drehen der angebrachten Kreiseleggenblattanordnung (1) zu übertragen; wobei die Kreiseleggenblattanordnung (1) mindestens ein Paar Kreiseleggenblätter (2) aufweist, die an einem drehbaren Blatthalterungsgehäuse (3) in einem festen Winkel mit einem Doppelbolzen (4) durch Löcher montiert sind, die an jedem Kreiseleggenblatt (2) vorgesehen sind, **dadurch gekennzeichnet, dass** der Doppelbolzen (4) ein Loch aufweist, in dem ein Einzelbolzen (5), der als ein tragendes Teil fungiert, durch einen in ein Loch des Einzelbolzens (5) eingeführten Verriegelungsbolzen (6) verriegelt ist, wodurch die Kreiseleggenblattanordnung (1) verriegelt und gehalten wird, so dass jedes Kreiseleggenblatt (2) an dem drehbaren Blatthalterungsgehäuse (3) durch einen Doppelbolzen (4), einen Einzelbolzen (5) und einen Verriegelungsbolzen (6) befestigt ist.

## Revendications

1. Mécanisme de montage rapide pour une lame de herse alternative, et un ensemble de lames de herse alternative porté par un rotor via des arbres d'entraînement (7, 10, 13) et des roues dentées (8, 9, 11, 12, 14) pour transférer la puissance et la rotation en vue de faire tourner l'ensemble de lames de herse alternative (1) qui y est attaché ; lequel ensemble de lames de herse alternative (1) comprend au moins une paire de lames de herse alternative (2) montées avec un angle fixe sur un logement de montage de lames tournant (3) avec une broche double (4) par le biais de trous prévus sur chacune des lames de herse alternative (2), **caractérisé en ce que** la broche double (4) a un trou dans lequel une broche simple (5), qui fonctionne comme une pièce de support, est verrouillée par une goupille clip (6) insérée dans un trou de la broche simple (5) en verrouillant et maintenant l'ensemble de lames de herse alternative (1) de telle sorte que chaque lame de herse alternative (2) est montée sur le logement de montage de lames tournant (3) par une broche double (4), une broche simple (5) et une goupille clip (6).
